# EUROPÄISCHE PATENTANMELDUNG

(11) **EP 1 388 680 A2**
(43) Veröffentlichungstag der Anmeldung: **11.02.2004**
(21) Anmeldenummer: 03017137.5
(22) Anmeldetag: 29.07.2003
(51) Int. Cl.: F16D 13/68

(54) **Anpresskraftübertragungsplatte für eine Reibungskupplung**

(30) Priorität: 10.08.2002 DE 10236841
(71) Anmelder: Sachs Race Engineering GmbH, 97424 Schweinfurt (DE)
(72) Erfinder: Friedrich, Horst, 97491 Aidhausen (DE); Selzam, Werner, 97537 Wipfeld (DE)

(57) **Zusammenfassung**

Eine Anpresskraftübertragungsplatte (26; 50) für eine Reibungskupplung umfasst einen ringartigen Plattenkörper (36; 53), welcher an einer - bezogen auf eine Plattendrehachse (A) - ersten axialen Seite eine wenigstens in einem Radialbereich gewölbte Kraftübertragungsfläche (40; 52) aufweist.

## Beschreibung

Die vorliegende Erfindung betrifft eine Anpresskraftübertragungsplatte für eine Reibungskupplung bzw. eine eine derartige Anpresskraftübertragüngsplatte umfassende Reibungskupplung.

Bei Reibungskupplungen, wie sie beispielsweise im Rennsport eingesetzt werden, wird die durch einen beispielsweise membranfederartig ausgebildeten Kraftspeicher bereitgestellte Anpresskraft durch eine ringartig ausgebildete Anpressplatte auf die reibend miteinander in Wechselwirkung stehenden oder bringbaren Reiborgane, beispielsweise Reiblamellen, übertragen. Auf Grund der im Rennsport auftretenden hohen Belastungen ist es nicht möglich, die bei herkömmlichen Kupplungsscheiben vorgesehenen Belagsfederungen im Bereich der verschiedenen Reiborgane bereitzuhalten. Derartige Belagfederungen ermöglichen jedoch beim Einrücken der Kupplung einen mehr oder weniger allmählich auftretenden Einrückzustand und vermeiden ein stoßartiges, spontanes Ansteigen des Kupplungsmoments, wodurch im normalen Fahrzeugbau ein vergleichsweise hoher Komfort erzielbar ist. Auch im Rennsport besteht die Anforderung nach einem derartigen allmählich auftretenden Schließen der Kupplung, da das Vermeiden eines spontanen oder stoßartigen Anstiegs des Kupplungsmomentes eine deutlich höhere Präzision der Einstellung des Kupplungsmoments ermöglicht. Dies ist insbesondere in der Startphase von Vorteil, da dann der angestrebte Schlupf der Antriebsräder im Bereich von 10% bis 15% durch entsprechende Kupplungsbetätigung wesentlich genauer eingestellt werden kann und darüber hinaus das durch zu schnelles Schließen der Kupplung möglicherweise auftretende Drücken der Motordrehzahl vermieden werden kann. Um auch im Bereich derartiger Kupplungen eine der Funktion der Belagsfederung herkömmlicher Kupplungen entsprechende Elastizität bereitstellen zu können, ist es beispielsweise möglich, die Anpressplatte im Bereich ihrer Kraftübertragungsfläche schirmartig auszubilden, d. h. mit zu einer zur Drehachse orthogonal stehenden Ebene von radial innen nach radial außen geneigtem Verlauf bereitzustellen. Dadurch wird beim Einrücken der Kupplung eine Verformung der Anpressplatte induziert, unter Erhöhung der durch die Anpressplatte bereitgestellten Gegenkraft. Es hat sich gezeigt, dass bei derartigen mit zu der angesprochenen Ebene schräg verlaufender Kraftübertragungsfläche ausgebildeten Anpressplatten ein mehr oder weniger linearer Anstieg der Gegenkraft vorhanden ist und zwar bis zur vollständigen Anlage der Anpressplatte. In der Phase, in welcher also noch eine elastische Verformung der Anpressplatte möglich ist, kann eine vergleichsweise präzise, Stöße vermeidende Betätigung der Kupplung vorgenommen werden. Bei Erreichen des maximal verformten Zustands der Anpressplatte tritt jedoch gleichwohl ein spontaner Anstieg des Kupplungsmoments auf, da im Bereich der Anpressplatte keine kompensierende Elastizität mehr vorhanden ist.

Es ist die Aufgabe der vorliegenden Erfindung, eine Anpresskraftübertragungsplatte für eine Reibungskupplung bzw. eine eine derartige Anpresskraftübertragungsplatte aufweisende Reibungskupplung bereitzustellen, bei welchen eine verbesserte Dosierbarkeit des Kupplungsmoments bei Durchführung von Kuppelvorgängen erhaltbar ist.

Gemäß einem ersten Aspekt der vorliegenden Erfindung wird diese Aufgabe gelöst durch eine Anpresskraftübertragungsplatte für eine Reibungskupplung, umfassend einen ringartigen Plattenkörper, welcher an einer - bezogen auf eine Plattendrehachse - ersten axialen Seite eine wenigstens in einem Radialbereich gewölbte Kraftübertragungsfläche aufweist.

Es hat sich gezeigt, dass durch eine gewölbte Ausgestaltung der Kraftüberträgungsfläche einer Anpresskraftübertragungsplatte nicht mehr ein linearer Gegenkraftanstieg bei Verformung derselben, sondern ein progressiver Kraftanstieg vorhanden ist, der bei Annäherung an die maximale Verformung deutlich steiler wird. Es wird daher bei Durchführung von Einkuppelvorgängen bei Annäherung an den maximal verformten Zustand dieser Platte kein sprungartiger Anstieg des Kupplungsmoments auftreten. Dadurch wird die Dosierbarkeit des Kupplungsmoments vor allem in der Anfangsphase eines Einkuppelvorgangs deutlich verbessert.

Beispielsweise kann vorgesehen sein, dass der Plattenkörper an seiner zweiten axialen Seite einen Kraftbeaufschlagungsabschnitt zur Einleitung einer durch einen Kraftspeicher bereitgestellten Kraft aufweist. In diesem Falle ist also die erfindungsgemäße Anpresskraftübertragungsplatte im Allgemeinen als dasjenige Bauteil zu betrachten, das in einer Reibungskupplung die Anpresskraft von einem Kraftspeicher aufnimmt und dann zu weiteren Komponenten leitet.

Um dabei'in definierter Art und Weise die gewünschte Verformung erlangen zu können, wird vorgeschlagen, dass der Kraftbeaufschlagungsabschnitt in radialer Richtung bei einem radialen Endbereich der Kraftübertragungsfläche angeordnet ist und dass in Richtung von dem einen radialen Endbereich zu dem anderen radialen Endbereich der Kraftübertragungsfläche ein axialer Abstand der Kraftübertragungsfläche zum Kraftbeaufschlagungsabschnitt zunimmt oder/und bereichsweise konstant bleibt. Vorzugsweise ist dabei vorgesehen, dass der Kraftbeaufschlagungsabschnitt in radialer Richtung nahe dem radial inneren Endbereich der Kraftbeaufschlagungsfläche angeordnet ist.

Gemäß einem weiteren Aspekt der vorliegenden Erfindung wird die eingangs genannte Aufgabe gelöst durch eine Reibungskupplung, umfassend eine mit einem Antriebsorgan zur gemeinsamen Drehung um eine Drehachse gekoppelte oder zu koppelnde Gehäuseanordnung, eine mit der Gehäuseanordnung drehfest gekoppelte, bezüglich dieser in Richtung der Drehachse verlagerbare und durch einen sich bezüglich der Gehäuseanordnung abstützenden Kraftspeicher beaufschlagbare Anpressplatte, welche eine erste Anpresskraftübertragungsfläche bereitstellt, ggf. eine Zwischenplatte, welche mit der Gehäuseanordnung zur gemeinsamen Drehung gekoppelt ist und eine mit der ersten Kraftübertragungsfläche der Anpressplatte in Anpresskraftübertragungskontakt stehende oder bringbare zweite Kraftübertragungsfläche zur Aufnahme einer Anpresskraft von der Anpressplatte aufweist, wobei wenigstens eine Kraftübertragungsfläche von erster Kraftübertragungsfläche und zweiter Kraftübertragungsfläche wenigstens in einem radialen Bereich gewölbt ausgebildet ist.

Die Erfindung wird nachfolgend mit Bezug auf die beiliegenden Zeichnungen detailliert beschrieben. Es zeigt:
- Fig. 1: eine Längsschnittansicht einer Reibungskupplung;
- Fig. 2: eine perspektivische Ansicht einer bei der in Fig. 1 dargestellten Reibungskupplung eingesetzten Anpressplatte;
- Fig. 3: eine vergrößerte Teilschnittansicht einer bekannten Anpressplatte;
- Fig. 4: ein Verformungsweg-Kraftdiagramm;
- Fig. 5: eine der Fig. 3 entsprechende Ansicht einer erfindungsgemäß ausgestalteten Anpressplatte;
- Fig. 6: eine weitere der Fig. 3 entsprechende Ansicht einer alternativen Ausgestaltungsform einer Anpressplatte;
- Fig. 7: eine Teil-Längsschnittansicht einer mit einer Anpressplatte zusammenwirkenden erfindungsgemäßen Zwischenplatte.

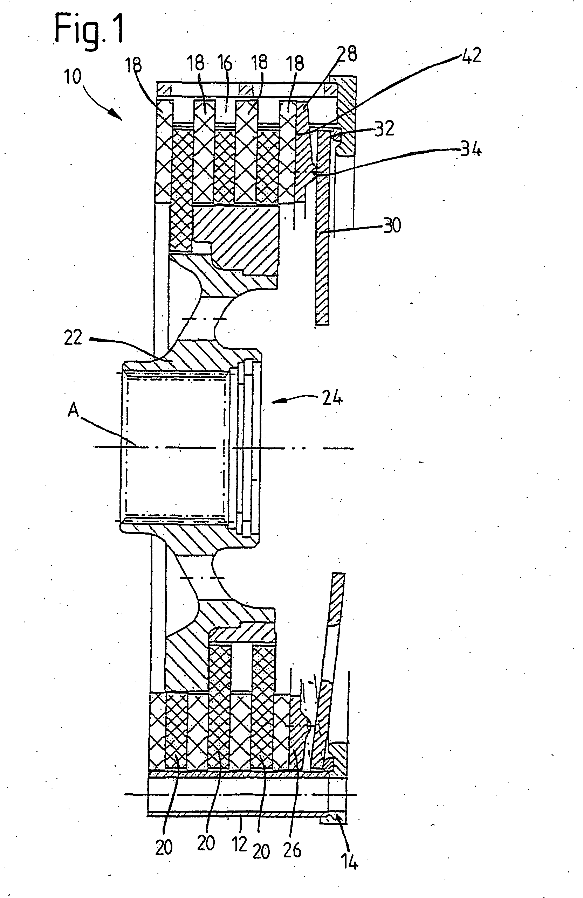

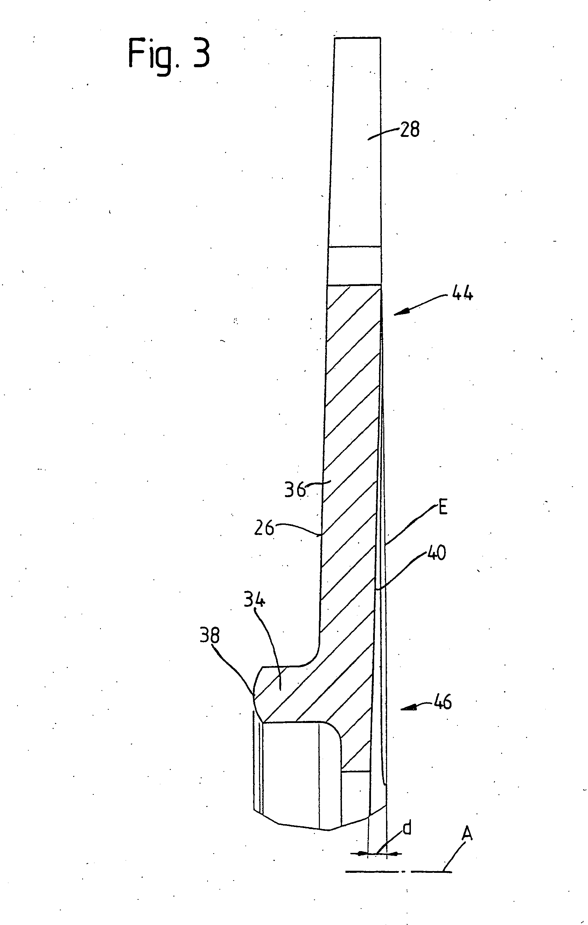

In Fig. 1 ist eine als Lamellenkupplung aufgebaute Reibungskupplung 10 dargestellt. Derartige Reibungskupplungen werden beispielsweise im Motorsport eingesetzt. Die Reibungskupplung 10 umfasst eine Gehäuseanordnung 12, mit welcher ein Gehäusedeckel 14 durch eine Mehrzahl von über den Umfang verteilt angeordneten Schraubbolzen (nicht gezeigt) an einer axialen Endseite - bezogen auf eine Drehachse A - fest verbunden ist. Die Gehäuseanordnung 12 weist an ihrer Innenseite über die Umfangsrichtung verteilt mehrere in Achsrichtung sich erstreckende Kopplungsvorsprünge 16 auf, mit welchen Außenlamellen 18 in Eingriff stehen, so dass die Außenlamellen 18 mit der Gehäuseanordnung 12 zwar drehfest, bezüglich dieser jedoch in Achsrichtung verlagerbar gekoppelt sind. Zwischen mehreren Außenlamellen 18 liegen Innenlamellen 20. Diese sind mit einer Nabenanordnung 22 einer allgemein mit 24 bezeichneten Kupplungsscheibenanordnung wiederum drehfest, in Achsrichtung in gewissem Ausmaß jedoch bewegbar gekoppelt. Die Nabenanordnung 24 kann dann in an sich bekannter Weise an eine Getriebeeingangswelle O. dgl. drehfest angekoppelt werden.

Ebenso wie die Außenlamellen 18 ist auch eine ringförmig ausgebildete Anpressplatte 26 mit der Gehäuseanordnung 12 im Bereich der Vorsprünge 16 drehfest gekoppelt. Dazu weist auch die Anpressplatte 26 über den Außenumfang verteilt mehrere Kopplungsvorsprünge 28 auf. Ein beispielsweise als Membranfeder ausgebildeter Kraftspeicher 30 ist in seinem radial äußeren Bereich über einen Drahtring 32 o. dgl. am Gehäusedeckel 14 abgestützt und beaufschlagt radial weiter innen einen Schneidenbereich 34 der Anpressplatte. Am radial inneren Endbereich des Kraftspeichers kann ein Ausrückermechanismus zum Ausrücken der Reibungskupplung 10 ziehend angreifen. Im Einrückzustand beaufschlagt der Kraftspeicher 30 die Anpressplatte 28, welche diese Beaufschlagungskraft auf eine der Außenlamellen 18 überträgt und damit die Außenlamellen 18 in Reibeingriff mit den Innenlamellen 20 presst. Dabei kann dann eine nicht dargestellte Schwungmassenanordnung, welche mit der Gehäuseanordnung 12 ebenso wie der Gehäusedeckel 14 fest verbunden werden kann, ein Widerlager bilden. Diese Schwungmassenanordnung kann selbst direkt eine mit einer Innenlamelle 20 zusammenwirkende Reibfläche bereitstellen, kann aber auch lediglich zur Axialabstützung einer der Außenlamellen 18 dienen, so dass, ebenso wie im Bereich der Anpressplatte 26, hier keine Umfangsreibwechselwirkung zur nächstfolgenden Lamelle, nämlich einer Außenlamelle 18, vorhanden sein wird.

In der Fig. 3 ist eine Teilschnittansicht einer bekannten Anpressplatte 28 vergrößert dargestellt. Man erkennt einen ringartigen Anpressplattenkörper 36, an welchem der Schneidenbereich 34 ausgebildet ist. Dieser bildet mit seinem Scheitelbereich einen Abstützbereich 38, an welchem der Kraftspeicher 30 die Anpressplatte 26 beaufschlagt. An ihrer anderen axialen Seite bildet die Anpressplatte 26 eine Kraftbeaufschlagungsfläche 40, mit welcher sie die vom Kraftspeicher 30 in diese eingeleitete Kraft weiterleitet, im Falle der Ausgestaltungsform gemäß Fig. 1 auf die mit der Anpressplatte 26 drehfest gehaltene Außenlamelle 18.

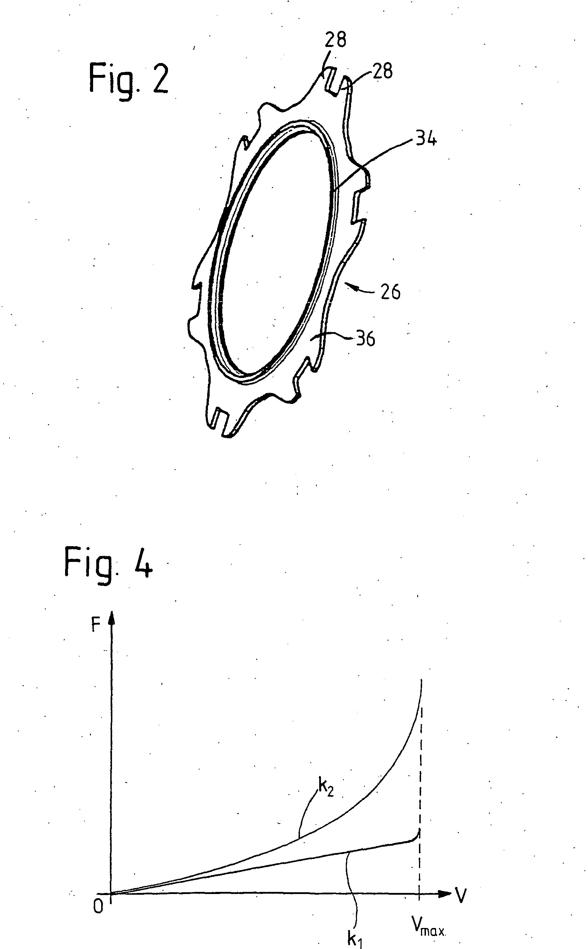

Man erkennt in Fig. 3, dass die Anpressplatte 26 im Bereich ihrer Kraftbeaufschlagungsfläche 40 schirmartig ausgebildet ist. D.h., dass diese Kraftbeaufschlagungsfläche 40 bezüglich einer zur Drehachse A orthogonal stehenden Ebene E geneigt verläuft. Dies wird vor allem auch durch den Abstand D zwischen dem radial inneren Endbereich dieser Kraftbeaufschlagungsfläche 40 und der fiktiven Ebene E erkennbar. Insbesondere ist die Ausgestaltung derart, dass der axiale Abstand der Kraftbeaufschlagungsfläche 40 zum Abstützbereich 38 von radial außen nach radial innen abnimmt. Beim Einrücken wird also die vom Kraftspeicher 30 geringfügig axial verschobene und kraftmäßig beaufschlagte Anpressplatte 26 mit der auf diese unmittelbar folgenden Außenlamelle 18, welche eine im Wesentlichen ebene, d. h. zur Ebene E parallele Gegen-Kraftbeaufschlagungsfläche 42 bereitstellt, zunächst in ihrem radial äußeren Bereich in Kontakt treten. Durch die Positionierung des Schneidenbereichs 34 bzw. des daran ausgebildeten Abstützbereichs 38 nahe dem radial inneren Endbereich 46 der Kraftbeaufschlagungsfläche 40 verformt sich unter der Kraft des Kraftspeichers 30 die Anpressplatte 26, so dass sie im Bereich ihres ringartigen Anpressplattenkörpers 36 in vollflächige Anlage mit der Außenlamelle 18 kommt. Es wird durch diese im Bereich der Anpressplatte 26 vorhandene Elastizität in die Reibungskupplung eine Funktion integriert, welche bei herkömmlichen Kupplungen der Funktion einer Belagsfederung in prinzipieller Hinsicht entspricht. D. h. beim Einrückvorgang stellt die Anpressplatte 26 nach Art einer Belagfederung eine Elastizität bzw. Gegenkraft bereit, die ein sanftes Einkuppeln ermöglicht. Der Verlauf dieser Gegenkraft ist in Fig. 4 durch die Kurve K₁ repräsentiert. Diese zeigt beginnend bei einem Verformungsweg V von Null, also einem Zustand, in welchem die Anpressplatte 26 durch den Kraftspeicher 30 im Wesentlichen nicht beaufschlagt ist, die bis zu einem maximalen Verformungsweg Vₘₐₓ auftretende Gegenkraft. Im Falle der mit gerdalinig sich erstreckender und bezüglich der Ebene E geneigt ausgebildeten Kraftbeaufschlagungsfläche 40 im Wesentlichen linear und knickt bei oder kurz vor Erreichen des maximalen Verformungsweges Vₘₐₓ scharf ab. Da dann eine vollflächige Anlage vorhanden ist, kann eine weitere Verformung nicht mehr auftreten, mit der Folge, dass auch keine Gegenkraft bzw. keine Elastizität im Bereich der Anpressplatte 26 mehr erzeugt wird.

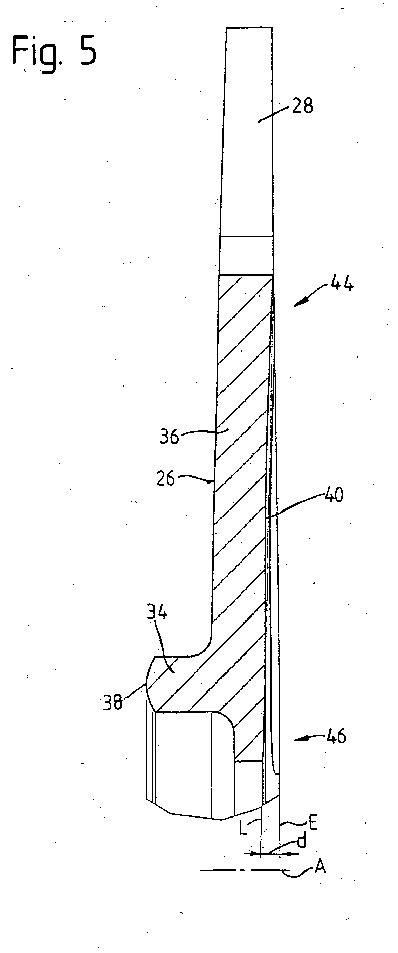

Aus diesem linearen Anstieg mit einem sehr scharfen Übergang in den Zustand, in welchem eine Verformung nicht mehr möglich ist, resultiert das Problem, dass in oder nahe diesem Übergangsbereich eine sehr genau dosierte Veränderung des Kupplungsmoments schwierig ist. Es besteht die Gefahr des Auftretens von Einkuppelstößen bzw. die Gefahr, dass auf Grund eines zu spontanen Anstiegs des Kupplungsmomentes beim kontinuierlichen Freigeben des Kraftspeichers 30 die Motordrehzahl zu stark gedrückt wird. Um diesem Problem entgegenzutreten, ist gemäß den Prinzipien der vorliegenden Erfindung eine Anpressplatte_vorgesehen, wie sie in Fig. 5 gezeigt ist. Man erkennt in Fig. 5, dass bezüglich einer zur Ebene E geneigt verlaufenden Linie L, welche beispielsweise dem geneigten Verlauf der in Fig. 3 dargestellten Kraftbeaufschlagungsfläche 40 entsprechen kann, die bei der erfindungsgemäßen Anpressplatte 26 vorgesehene Kraftbeaufschlagungsfläche 40 gewölbt ist. Im Ausgestaltungsbeispiel der Fig. 5 ist eine konkave Wölbung vorgesehen. Die Wölbung beginnt im radial äußeren Bereich der Kraftbeaufschlagungsfläche 40 und erstreckt sich vorzugsweise bis zum radial inneren Endbereich 46, wo dann in einem Endabschnitt die Kraftbeaufschlagungsfläche 40 sich entlang der geradlinig erstreckenden Linie L erstrecken kann. Durch diese Wölbung der Kraftbeaufschlagungsfläche 40 wird, ähnlich wie bei der in Fig. 3 dargestellten Ausgestaltungsform, eine schirmförmig ausgebildete Anpressplatte 26 bzw. Kraftbeaufschlagungsfläche 40 derselben bereitgestellt, was wiederum den Erhalt einer bestimmten Elastizität bzw. Gegenkraft bei Durchführung eines Einrückvorgangs mit sich bringt. Auf Grund der erfindungsgemäßen vorzusehenden Wölbung, die sich also näherungsweise über den gesamten radialen Erstreckungsbereich des ringartigen Anpressplattenkörpers 36 erstreckt, wird jedoch eine Kraftcharakteristik erhalten, wie sie in Fig. 4 anhand der Linie K₂ dargestellt ist. Man erkennt hier eine deutliche Abweichung von einem linearen Verlauf der Gegenkraft in Abhängigkeit von der Verformung der Anpressplatte 26. Vielmehr ist ein progressiver Kraftverlauf vorhanden, d. h. ein Kraftverlauf, bei welchem der Gradient der Linie K₂ stetig zunimmt. Auf diese Art und Weise wird der bei Annäherung an den maximalen Verformungsweg Vₘₐₓ in der Kurve K₁ erkennbare Knickbereich vermieden und es wird ein allmählicher Übergang in den Zustand, in welchen eine Verformung nicht mehr auftreten wird, erreicht, da bereits im Wesentlichen die gesamte Kraftbeaufschlagungsfläche 40 an der Gegen-Kraftbeaufschlagungsfläche 42 der Außenlamelle 18 anliegt. Dies verbessert die Dosierbarkeit des Kupplungsmoments bei Durchführung eines Einrückvorgangs erheblich. Es wird möglich, mit hoher Präzision ein definiertes Kupplungsmoment einzustellen, so dass mit entsprechend hoher Präzision das auf die Antriebsräder und von diesen auf den Untergrund übertragene Drehmoment eingestellt bzw. variiert werden kann. Dies ist insbesondere im Rennsportbereich in der Startphase von Bedeutung, in welcher die Antriebsräder mit einem bestimmten Antriebsschlupf drehen sollen.

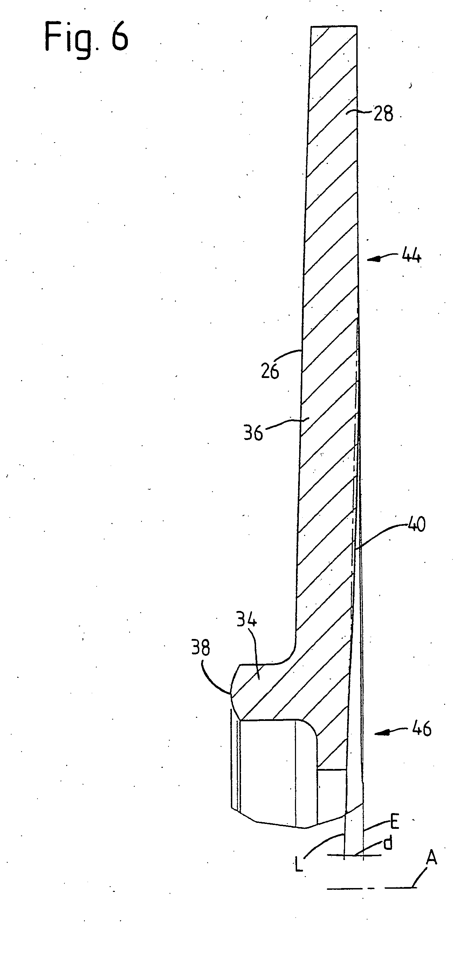

Bei der in Fig. 6 dargestellten Ausgestaltungsform einer Anpressplatte ist die Kraftbeaufschlagungsfläche 40 in ihrem wesentlichen Erstreckungsbereich zwischen dem radial inneren Endbereich 46 und dem radial äußeren Endbereich 44 konvex gewölbt, wobei als Bezugslinie hier beispielsweise wiederum die bezüglich der zur Drehachse A orthogonal stehende Ebene E zum Bilden des Abstands d geneigt verlaufende Linie L herangezogen werden kann. Auch bei dieser Art der Wölbung ergibt sich ein Kraftverlauf mit progressiver Kennlinie, d. h. in Richtung maximale Verformung der Anpressplatte 26 ständig zunehmendem Gradienten. Auch bei der in Fig. 6 dargestellten Ausgestaltungsform mit konvexer Wölbung kann vorgesehen sein, dass der radial innere Endabschnitt der Kraftbeaufschlagungsfläche 40, welcher beispielsweise der sich radial mit dem Schneidenbereich 34 überlappende Bereich ist, dann wieder näherungsweise parallel zur Linie L verlaufend ausgebildet ist. Bei beiden in den Figuren 5 und 6 dargestellten Ausgestaltungsvarianten ist jedoch vorgesehen, dass von radial außen nach radial innen, also zu demjenigen Bereich, in welchemd der Schneidenbereich 34 vorgesehen ist und somit die Kraft in die Anpressplatte 26 eingeleitet wird, der axiale Abstand zwischen dem Abstützbereich 38 am Schneidenbereich 34 und der Kraftbeaufschlagungsfläche 40 stetig abnimmt.

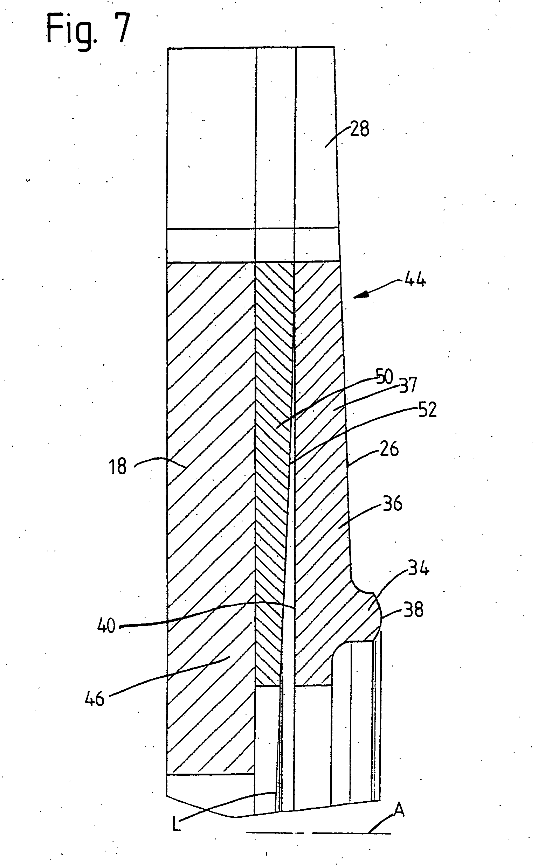

In Fig. 7 ist eine Ausgestaltungsform dargestellt, bei welcher der gleiche Elastizitätsverlauf, wie anhand der Kurve K₂ in Fig. 4 gezeigt, erhalten werden kann, indem eine entsprechende Wölbung im Bereich einer Zwischenplatte 50 vorgesehen ist. Über diese Zwischenplatte 50 beaufschlagt die Anpressplatte 26 dann die erste Außenlamelle 18. Es sei hier darauf hingewiesen, dass in diesem Falle die Anpressplatte 26 mit der Zwischenplatte 50 und der ersten Außenlamelle 18 gemeinsam drehbar ist, d.h. zwischen diesen drei Bauteilen wird keine Umfangsreibwirkung erzeugt. Grundsätzlich wäre es daher auch denkbar, die im Folgenden beschriebene Formgebung der Kraftbeaufschlagungsfläche 52 der Zwischenplatte 50 im Bereich der Außenlamelle 18 vorzusehen, nämlich im Bereich der Gegen-Kraftbeaufschlagungsfläche 42 derselben.

Bei der in Fig. 7 dargestellten Ausgestaltungsform ist die Kraftbeaüfschlagungsfläche 40 der Anpressplatte 26 so ausgebildet, dass sie zur Drehachse A im Wesentlichen orthogonal steht, d. h. zu der vorangehend angesprochenen fiktiven Ebene E parallel liegt. Die Kraftbeaufschlagungsfläche 52 an einem ringartigen Zwischenplattenkörper 53 der Zwischenplatte 50 ist nunmehr gewölbt ausgebildet, wobei im dargestellten Beispiel hier wieder bezogen auf die zur Ebene E geneigt verlaufende Linie L eine konvexe Wölbung vorgesehen ist. Die Schrägstellung bzw. Wölbung der Kraftbeaufschlagungsfläche 52 ist derart, dass der erste Kontakt zwischen dieser Kraftbeaufschlagungsfläche 52 und der Kraftbeaufschlägungsfläche 40 der Anpressplatte 26 am radial äußeren Endbereich 44 auftreten wird, während am radial inneren Endbereich 46, also demjenigen Bereich, in welchem auch der Schneidenbereich 34 liegt und somit die Kraft in die Anpressplatte 26 eingeleitet wird, noch ein axialer Abstand zwischen der Anpressplatte 26 und der Zwischenplatte 50 vorhanden ist. Bei zunehmender Kraftbeaufschlagung durch den Kraftspeicher wird sich dann die Anpressplatte 26 mit ihrer Kraftbeaufschlagungsfläche 40 zunehmend von radial außen nach radial innen an die Kraftbeaufschlagungsfläche 52 anlegen, wobei wiederum eine durch die Verformung der Anpressplatte 26 induzierte Gegenkraft erzeugt wird, deren Verlauf grundsätzlich auch dem Verlauf K₂ in Fig. 4 entspricht. Auch hier wird also ein progressiver Gegenkraftanstieg erhalten, welcher eine sehr gute Dosierbarkeit der Kupplung in dieser Phase gewährleistet.

Es sei darauf hingewiesen, dass es selbstverständlich auch möglich ist, die Ausgestaltungsform der Fig. 7 mit den Ausgestaltungsformen der Figuren 5 bzw. 6 zu kombinieren, so dass sowohl in einer Zwischenplatte als auch in der Anpressplatte eine Schrägstellung bzw. Wölbung vorhanden ist. Die Auswahl, an welchem Bauteil bzw. an welchen Bauteilen eine Wölbung vorhanden ist bzw. das Ausmaß der Wölbung oder die Art der Wölbung können in Abhängigkeit von den hinsichtlich der Gegenkraft bzw. des Gegenkraftverlaufs bestehenden Anforderungen ausgewählt werden.

Durch die erfindungsgemäße Ausgestaltung einer Kraftbeaufschlagungsfläche einer Anpressplatte bzw. einer Zwischenplatte einer Reibungskupplung kann in eine derartige Reibungskupplung, welche insbesondere im Rennsportbereich eingesetzt wird und somit sehr hohen Belastungen, auch thermischen Belastungen, unterliegt, eine elastische Funktion integriert werden, welche im Wesentlichen der Funktion einer Belagsfederung bei herkömmlichen Reibungskupplungen bzw. Kupplungsscheiben derselben entspricht. Die erfindungsgemäße Integration einer derartigen Elastizität sieht jedoch einen sehr temperaturbeständigen und dauerfesten Aufbau vor, wobei hier durch die Auswahl spezieller Baumaterialien, wie z. B. Federstahl für die sich verformende Platte, eine weitere Verbesserung der Eigenschaften erzielt werden kann.

## Patentansprüche

1. Anpresskraftübertragungsplatte (26; 50) für eine Reibungskupplung umfassend einen ringartigen Plattenkörper (36; 53), welcher an einer - bezogen auf eine Plattendrehachse (A) - ersten axialen Seite eine wenigstens in einem Radialbereich gewölbte Kraftübertragungsfläche (40; 52) aufweist.

2. Anpresskraftübertragungsplatte nach Anspruch 1,
**dadurch gekennzeichnet, dass** der Plattenkörper (40) an seiner zweiten axialen Seite einen Kraftbeaufschlagungsabschnitt (38) zur Einleitung einer durch einen Kraftspeicher bereitgestellten Kraft aufweist.

3. Anpresskraftübertragungsplatte nach Anspruch 2,
**dadurch gekennzeichnet, dass** der Kraftbeaufschlagungsabschnitt (38) in radialer Richtung bei einem radialen Endbereich (46) der Kraftübertragungsfläche (40) angeordnet ist und dass in Richtung von dem einen radialen Endbereich (46) zu dem anderen radialen Endbereich (44) der Kraftübertragungsfläche (40) ein axialer Abstand der Kraftübertragungsfläche (40) zum Kraftbeaufschlagungsabschnitt (38) zunimmt oder/und bereichsweise konstant bleibt.

4. Anpresskraftübertragungsplatte nach Anspruch 3,
**dadurch gekennzeichnet, dass** der Kraftbeaufschlagungsabschnitt (38) in radialer Richtung nahe dem radial inneren Endbereich (46) der Kraftbeaufschlagungsfläche (40) angeordnet ist.

5. Reibungskupplung, umfassend eine mit einem Antriebsorgan zur gemeinsamen Drehung um eine Drehachse (A) gekoppelte oder zu koppelnde Gehäuseanordnung (12), eine mit der Gehäuseanordnung (12) drehfest gekoppelte, bezüglich dieser in Richtung der Drehachse (A) verlagerbare und durch einen sich bezüglich der Gehäuseanordnung (12) abstützenden Kraftspeicher (36) beaufschlagbare Anpressplatte (20), welche eine erste Anpresskraftübertragungsfläche (40) bereitstellt, gegebenenfalls eine Zwischenplatte (50), welche mit der Gehäuseanordnung (12) zur gemeinsamen Drehung gekoppelt ist und eine mit der ersten Kraftübertragungsfläche (40) der Anpressplatte (26) in Anpresskraftübertragungskontakt stehende oder bringbare zweite Kraftübertragungsfläche (52) zur Aufnahme einer Anpresskraft von der Anpressplatte (26) aufweist, wobei wenigstens eine Kraftübertragungsfläche (40, 52) von erster Kraftübertragungsfläche (40) und zweiter Kraftübertragungsfläche (52) wenigstens in einem radialen Bereich gewölbt ausgebildet ist.
